# FASCICULE DE BREVET EUROPEEN

(11) **EP 0 479 636 B1**
(45) Date de publication et mention de la délivrance du brevet: **11.01.1995**
(21) Numéro de dépôt: 91402485.6
(22) Date de dépôt: 18.09.1991
(51) Int. Cl.: B60J 10/08

(54) **Profilé en élastomère comportant un élément tubulaire de forme et de section transversale réglables**
Elastomerisches Profil mit einem rohrförmigen Element und einem verstellbaren Querschnitt ausgestattet
Elastomeric profile having a tubular element and an adjustable transversal section

(30) Priorité: 26.09.1990 FR 9011853
(43) Date de publication de la demande: 08.04.1992
(73) Titulaire: ETABLISSEMENTS MESNEL SOCIETE ANONYME DITE :, F-78420 Carrières-Sur-Seine (FR)
(72) Inventeur: Mesnel, François, F-92200 Neuilly-Sur-Seine (FR); Mesnel, Gérard, F-78420 Carrières-Sur-Seine (FR)
(74) Mandataire: Jolly, Jean-Pierre

(56) Documents cités:
- GB-A- 652 706
- GB-A- 714 554
- GB-A- 2 130 278

## Description

La présente invention concerne un profilé en élastomère comportant un élément tubulaire, de forme et de section transversale réglables.

On sait que de tels profilés comportant un élément tubulaire sont utilisés notamment pour assurer l'étanchéité entre un panneau ouvrant et un panneau dormant et, plus particulièrement, entre une porte d'automobile et un encadrement de porte de la carrosserie. Le profilé comprend habituellement dans ce but une partie à section en U formant pince, généralement équipée d'une armature métallique, qui peut être rendu solidaire d'un élément saillant du panneau dormant, et une partie tubulaire apte à se déformer élastiquement, qui est attenante à la partie à section en U et qui est destinée à être comprimée entre le panneau ouvrant et le panneau dormant.

Dans d'autres cas, l'élément tubulaire de tels profilés a un rôle d'enjoliveur et il peut comporter une ou des lèvres renforçant son caractère ornemental.

GB-A-714 554 décrit, en référence à sa figure 6, un profilé en caoutchouc comportant une partie métallique, non noyée dans le caoutchouc, qui vient se clipser sur une feuillure métallique de la carrosserie, et dont une partie souple, recourbée de manière à former une partie tubulaire, comporte une extrémité pincée entre l'armature et la partie métallique.

Il n'est toutefois pas possible de régler la position de l'extrémité pincée du profilé selon GB-A-714 554, alors que, pour certaines formes particulières d'encadrements de porte, il serait avantageux de pouvoir disposer d'un profilé dont la partie tubulaire aurait une forme et une section adaptables à l'encadrement considéré.

C'est ce problème que se propose de résoudre la présente invention, en proposant un profilé à forme variable du type ci-dessus, dont la partie tubulaire peut être modifiée en forme et en dimension transversale.

A cet effet, l'invention a pour objet un profilé en élastomère comportant une partie à section en U, apte à coiffer un élément saillant d'une ossature, et un élément tubulaire attenant à une branche du U, ledit élément tubulaire étant formé d'une bande , qui est solidaire par une première portion latérale de ladite branche du U et dont la deuxième portion latérale est apte à être engagée à force entre la partie à section en U du profilé et une partie contiguë du profilé, pour former ledit élément tubulaire, le profilé étant caractérisé en ce que les surfaces de contact de la deuxième portion latérale et la partie avec laquelle elle coopère ont des profils cannelés ou rainurés complémentaires permettant de les assembler en une pluralité de positions distinctes, de manière à ce que la section dudit élément tubulaire soit réglable.

En engageant plus ou moins la deuxième portion latérale de la bande définissant l'élément tubulaire entre la partie en U du profité et une partie contiguë de celui-ci, il sera ainsi possible à l'utilisateur du profilé de faire varier la forme et la section transversale du profilé.

Avantageusement, afin de conférer à la partie à section en U du profilé et à la partie contiguë une rigidité suffisante permettant d'engager à force entre ces parties la portion latérale associée de l'élément tubulaire, ces deux parties comprendront une armature métallique.

La portion latérale de la bande constituant l'élément tubulaire qui est engagé entre la partie à section en U du profilé et la partie contiguë de celui-ci devra, elle aussi, avoir une rigidité suffisante et, dans ce but, elle pourra soit comporter une armature métallique, soit avoir une dureté appropriée. Dans le cas où elle comportera une armature métallique, il sera possible de faire varier la forme de la partie tubulaire en déformant la partie équipée de l'armature.

La seconde partie latérale de la bande formant l'élément tubulaire pourra être engagée entre la base du U de la partie à section en U et une partie contiguë parallèle du profilé, ou entre la bande du U de la partie à section en U dont n'est pas solidaire la première portion latérale de la bande et une partie contiguë parallèle du profilé, ou encore, éventuellement, entre les deux branches du U.

La première portion latérale de la bande formant l'élément tubulaire pourra être venue d'extrusion avec le profilé ou être collée sur celui-ci. Elle pourra aussi, comme on le verra plus en détail ci-après, être pincée, comme la seconde portion latérale, entre une branche de la partie en U et une partie contiguë parallèle du profilé.

Les dessins annexés illustrent diverses formes de mise en oeuvre de l'invention. Sur ces dessins :
Les figures 1, 2, 3 et 4 illustrent, en coupe transversale, une première forme de réalisation de l'invention, respectivement venue d'extrusion et après mise en forme de l'élément tubulaire d'étanchéité, les différentes formes représentées de cet élément étant obtenues par déformation de la seconde portion, équipée d'une armature métallique, de la bande formant cet élément tubulaire;
La figure 5 est une vue analogue à la figure 2, dans le cas où la seconde portion de l'élémènt tubulaire ne comporte pas d'armature métallique;
Les figures 6, 7 et 8 sont des vues en coupe de trois autres formes de réalisation de l'invention.

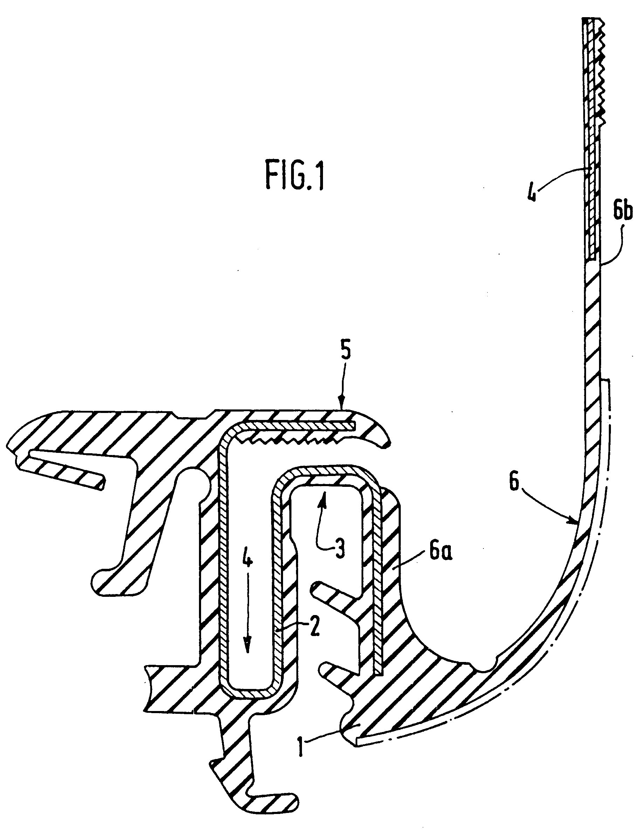

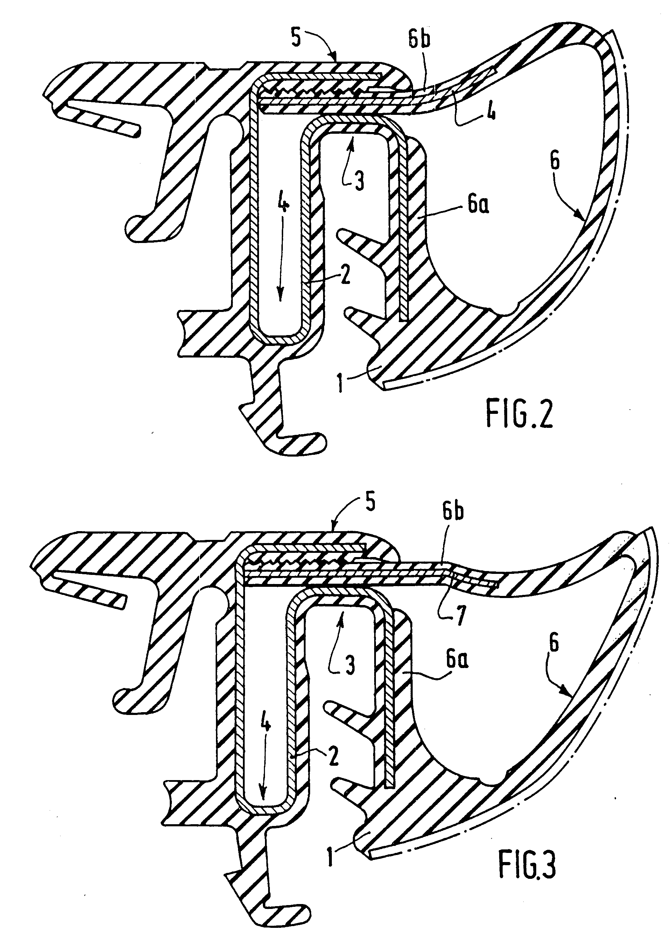

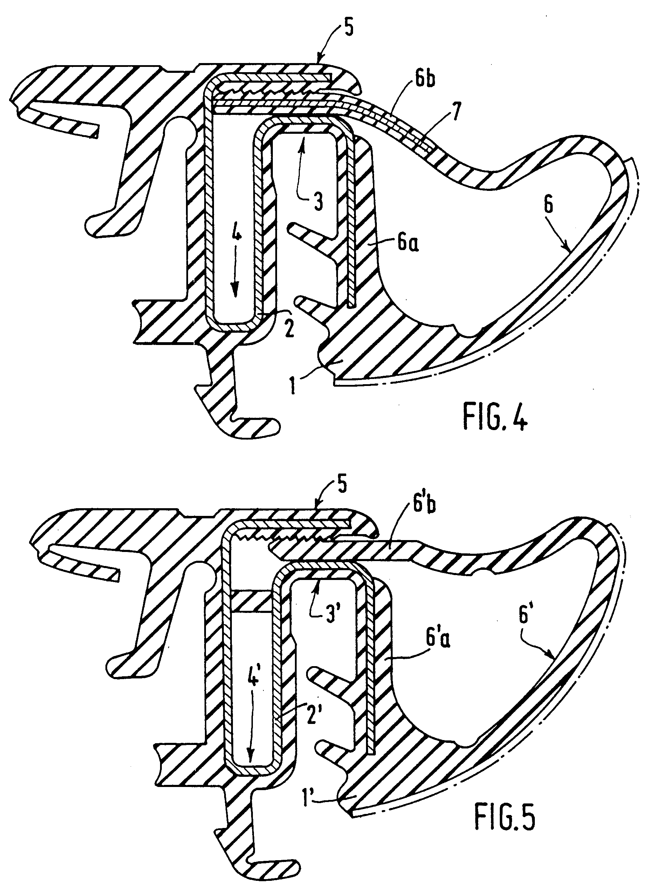

On se réfèrera d'abord aux figures 1 à 4. Ces figures représentent une même forme de réalisation du profilé conforme à l'invention, venue de fabrication (figure 1) et en position d'utilisation, avec un élément tubulaire d'étanchéité de forme variée (figures 2 à 4).

Ce profilé est en un élastomère 1, renforcé sur une partie de sa longueur par une armature métallique 2. L'armature métallique peut être de tout type connu dans la technique des profilés utilisés dans l'industrie automobile. La portion armée du profilé comprend une partie 3 à section transversale en U, destinée à être rendue solidaire par pincement d'un élément saillant d'un encadrement de porte d'automobile, une seconde partie 4 à section en U inversée par rapport au profilé de la partie 3, et une bande 5 prolongeant latéralement la partie 4, parallèlement à la base du U de la partie 3. Ce profilé est réalisé par extrusion de l'élastomère 1 sur l'armature métallique 2 et il présente diverses lèvres ayant un rôle connu dans la technique et qui sont étrangères à la présente invention.

Conformément à l'invention, le profilé comprend une bande 6, attenante par l'une de ses portions latérales 6a, ici venue d'extrusion avec le reste du profilé, à une branche du U de la partie 3, et dont l'autre portion latérale 6b, ici équipée d'une armature métallique 7, peut être engagée plus ou moins, à force, entre la base du U de la partie 3 et la bande 5, pour former un élément tubulaire d'étanchéité attenant à la partie 3. Ainsi qu'il a été représenté sur les dessins, les surfaces en regard de la bande 5 et de la portion latérale 6b de la bande 6 présenteront en 8 des stries ou des cannelures de profil complémentaire, leur permettant de coopérer par emboîtement et de maintenir la bande 6 verrouillée en position.

Il est ainsi possible, en engageant plus ou moins la partie 6b entre le fond de la partie 3 et la bande 5, de donner une section et une forme variable à l'élément tubulaire d'étanchéité formé par la bande 6 repliée pour former un tube. Avec la portion 6b engagée d'une même longueur entre le fond du U de la partie 3 et la bande 5, il est possible également de faire varier la forme de l'élément tubulaire en déformant plus ou moins l'armature métallique 7, comme on le voit sur les figures 2, 3 et 4.

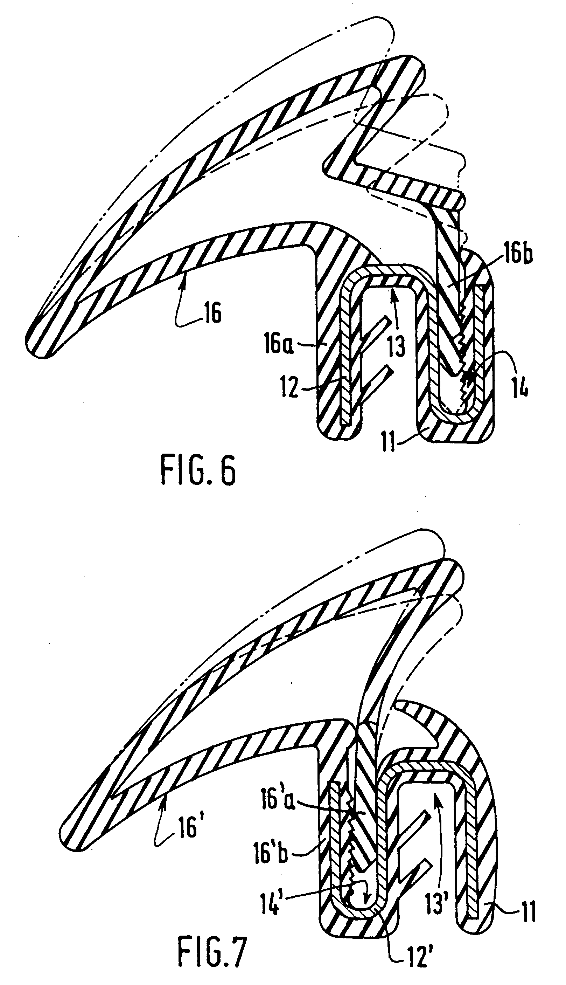

Les figures 5 à 8 représentent d'autres formes de réalisation de l'invention.

La figure 5, où les organes déjà décrits en relation avec les figures 1 à 4 sont désignés par les mêmes chiffres de référence affectés de l'indice ′, représente un profilé analogue à celui des figures précédentes, avec cette différence que la portion latérale 6′b de la partie 6 ne comporte plus d'armature, mais a une dureté suffisante pour présenter la rigidité désirée.

Dans le profilé de la figure 6, sur laquelle les organes représentés sur les figures 1 à 4 sont désignés par les mêmes chiffres de référence augmentés de 10, la portion latérale 16b de la bande 16 est engagée entre les deux branches de la partie 14 en U inversée par rapport à celui de la partie en U 13, à laquelle est attenante la bande 16. Sur cette figure, les différentes formes que peut prendre la partie tubulaire formée par la bande 16 repliée, suivant que la portion latérale 16b est plus ou moins engagée entre les branches du U de la partie 14, sont représentées en traits interrompus.

La figure 7, où les organes décrits en relation avec la figure 6 sont désignés par les mîmes chiffres de référence affectés de l'indice ′, illustre une variante du profilé représenté sur cette figure 6, où l'élément tubulaire a une forme différente et où la position des parties en U, 13′ et 14′, est inversée par rapport à celles des parties 13 et 14.

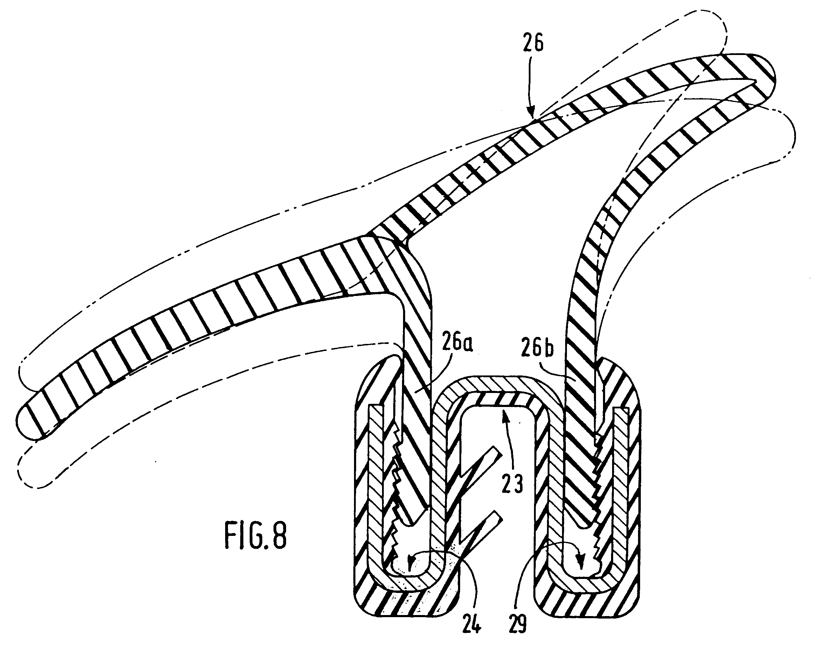

La figure 8 représente enfin un profilé conforme à l'invention dans lequel la bande 26 destinée à former l'élément tubulaire n'est plus venue de fabrication avec la partie 23 à section en U destinée à coiffer un élément saillant d'une carrosserie d'automobile ou similaire, mais est distincte de celle-ci.

Les branches du U de cette partie 23 se prolongent latéralement pour former deux parties 24 et 29, à section en U inversée par rapport à la partie 23, dans lesquelles sont engagées plus ou moins les parties latérales 26a et 26b de la bande 26, de manière à faire varier la forme de l'élément tubulaire ainsi réalisé, dont différents profils sont représentés en traits interrompus sur le dessin. Dans cette forme de réalisation, une lèvre 30 est attenante à la bande 26 et a un rôle ornemental.

L'invention apporte donc un moyen simple et facile à mettre en oeuvre pour réaliser des profilés comportant un élément tubulaire de profil et de section variable.

## Revendications

1. Profilé en élastomère comportant une partie (3) à section en U, apte à coiffer un élément saillant d'une ossature, et un élément tubulaire attenant à une branche du U, ledit élément tubulaire étant formé d'une bande (6), qui est solidaire par une première portion latérale (6a) de ladite branche du U et dont la deuxième portion latérale (6b) est apte à être engagée à force entre la partie (3) à section en U du profilé et une partie (5) contiguë du profilé, pour former ledit élément tubulaire, le profilé étant caractérisé en ce que les surfaces de contact de la deuxième portion latérale (6b) et la partie (5) avec laquelle elle coopère ont des profils cannelés ou rainurés complémentaires permettant de les assembler en une pluralité de positions distinctes, de manière à ce que la section dudit élément tubulaire soit réglable.

2. Profilé selon la revendication 1, caractérisé en ce que la partie (3) à section en U du profilé comporte une armature métallique (2) de renfort.

3. Profilé selon l'une des revendications 1 et 2, caractérisé en ce que la portion latérale (6b) de la bande (6) apte à être engagée à force entre la partie (3) à section en U du profilé et une partie (5) contiguë de celui-ci comporte une armature métallique (7) de renfort.

4. Profilé selon l'une des revendications 1 et 2, caractérisé en ce que la portion latérale (6b) de la bande (6) apte à être engagée à force entre la partie (3) à section en U du profilé et une partie (5) contiguë de celui-ci présente une dureté suffisante pour lui conférer la rigidité désirée pour être engagée à force entre lesdites parties (3) et (5).

5. Profilé selon l'une des revendications 1 à 4, caractérisé en ce que ladite seconde portion latérale (6b) de la bande (6) est apte à être engagée entre la base du U de la partie (3) à section en U du profilé et une partie (5) contiguë parallèle de celui-ci.

6. Profilé selon l'une des revendications 1 à 4, caractérisé en ce que ladite seconde portion latérale (16b) de la bande (16) est apte à être engagée entre la branche du U de la partie (13) , à section en U du profilé dont n'est pas solidaire ladite première portion (16a) de la bande (16) et une partie contiguë parallèle du profilé, attenante à l'autre branche du U.

7. Profilé selon l'une des revendications 1 à 4, caractérisé en ce que ladite bande (26) constitue un organe distinct, du corps du profilé comprenant la partie à section en U (23) en ce que les branches de cette partie en U se prolongent en formant deux autres parties en U (24,29) à section inversée par rapport à celle de la partie (23) et en ce que les bords latéraux (26a,26b) de la bande 26 sont aptes à être engagés à force entre les branches des parties à section en U (24,29).

## Claims

1. An elastomeric profile comprising a U-shaped cross sectional portion (3) for attachment to the edge of a projecting frame element, and a tubular element adjoining one branch of the U, said tubular element being formed by a strip (6) which is integral with a first lateral portion (6a) of said branch of the U and wherein a second lateral portion (6b) is adapted for a force fit between the U-shaped cross sectional portion (3) of the profile and a portion (5) which is contiguous with the profile to form said tubular element, the profile being characterised in that the contact surfaces of the second lateral portion (6b) and the portion (5) with which it cooperates is provided with complementary serrated or ribbed profiles in order to enable them to be assembled in a plurality of distinct positions so that the cross section of said tubular element is adjustable.

2. Profile according to claim 1, characterised in that the U- shaped cross sectional portion (3) of the profile comprises a metal stiffening member (2).

3. Profile according to claim 1 or claim 2, characterised in that the lateral portion (6b) of strip (6) adapted for a force fit between the U-shaped cross sectional portion of the profile and a portion (5) which is contiguous therewith comprises a metal stiffening member (7).

4. Profile according to claim 1 or claim 2, characterised in that the lateral portion (6b) of the strip (6) adapted for a force fit between the U-shaped cross sectional portion of the profile and a portion (5) which is contiguous therewith is sufficiently hard to be force fitted between said portions (3) and (5).

5. Profile according to any one of claims 1 to 4, characterised in that said second lateral portion (6b) of the strip (6) is adapted for a force fit between the base of the U-shaped cross sectional portion of the profile and a portion (5) which is contiguous with and parallel thereto.

6. Profile according to any one of claims 1 to 4, characterised in that said second lateral portion (16b) of the strip (16) is adapted for a force fit between the branch of the U-shaped cross sectional portion (13) of the profile which is not integral with said first portion (16a) of the strip (16) and a portion which is contiguous with and parallel to the profile, adjoining the other branch of the U.

7. Profile according to any one of claims 1 to 4, characterised in that said strip (26) constitutes a separate element from the body of the profile comprising the U-shaped cross sectional portion (23), in that the branches of this U-shaped portion are extended to form two further U-shaped portions (24, 29) with their cross sections arranged in the opposite direction to that of portion (23), and in that the lateral edges (26a, 26b) of the strip (26) are adapted for a force fit between the branches of the U-shaped cross sectional portions (24, 29).

## Patentansprüche

1. Profilelement aus Elastomer, mit einem U-förmigen Teilstück (3), das dafür geeignet ist, ein Element abzudecken, das aus einem Rahmen vortritt, und mit einem rohrförmigen Element, das an einen Schenkel des U angrenzt, wobei das rohrförmige Element aus einem Band (6) ausgebildet ist, das mit einem ersten Seitenbereich (6a) des besagten Schenkels des U fest verbunden ist und bei dem der zweite Seitenbereich (6b) dafür geeignet ist, mit Kraft zwischen das U-förmige Teilstück (3) des Profilelements und ein hierzu benachbartes Teilstück (5) des Profilelements eingebracht zu werden, um das besagte rohrförmige Element zu bilden, wobei das Profilelement dadurch gekennzeichnet ist, daß die Anlageoberflächen des zweiten Seitenbereichs (6b) und des Teilstücks (5), mit welchem der Seitenbereich zusammenwirkt, mit Rinnen oder Nuten versehene komplementäre Profile aufweisen, die es erlauben, in einer Vielzahl von unterschiedlichen Positionen derart montiert zu werden, daß der Querschnitt des besagten rohrförmigen Elements einstellbar ist.

2. Profilelement nach Anspruch 1, dadurch gekennzeichnet, daß das U-förmige Teilstück (3) des Profilelements eine Metallarmierung (2) zur Verstärkung aufweist.

3. Profilelement nach einem der Ansprüche 1 und 2, dadurch gekennzeichnet, daß der Seitenbereich (6b) des Bandes (6) dafür geeignet ist, unter Kraft zwischen das U-förmige Teilstück (3) des Profilelements und ein Teilstück (5) eingebracht zu werden, welches demjenigen benachbart ist, das eine Metallarmierung (7) zur Verstärkung trägt.

4. Profilelement nach einem der Ansprüche 1 und 2, dadurch gekennzeichnet, daß der Seitenbereich (6b) des Bandes (6), der dafür geeignet ist, unter Kraft zwischen das U-förmige Teilstück (3) des Profilelements und ein Teilstück (5) eingebracht zu werden, welches diesem benachbart ist, eine ausreichende Härte aufweist, um ihm die Festigkeit zu verleihen, die erwünscht ist, um zwischen die Teilstücke (3) und (5) eingebracht zu werden.

5. Profilelement nach einem der Ansprüche 1 bis 4, dadurch gekennzeichnet, daß der besagte zweite Seitenbereich (6b) des Bandes (6) dafür geeignet ist, zwischen der Basis des U des U-förmigen Teilstücks (3) des Profilelements und einem Teilstück (5) eingebracht zu werden, welches parallel und diesem benachbart ist.

6. Profilelement nach einem der Ansprüche 1 bis 4, dadurch gekennzeichnet, daß der besagte zweite Seitenbereich (16b) des Bandes (16) dafür geignet ist, zwischen den Schenkel des U des U-förmigen Teilstücks (13) des Profilelements, mit welchem der besagte erste Bereich (16a) des Bandes (16) nicht fest verbunden ist, und einem Teilstück eingebracht zu werden, das benachbart parallel dem Profilelement, angrenzend an den anderen Schenkel des Us ist.

7. Profilelement nach einem der Ansprüche 1 bis 4, dadurch gekennzeichnet, daß das besagte Band (26) ein gegenüber dem Körper des Profilelements, welches das U-förmige Teilstück (23) aufweist, anderes Organ bildet, daß die Schenkel des U-förmigen Teilstücks sich verlängern und dabei zwei weitere U-Teilstücke (24,29) ausbilden, die gegenüber dem Teilstück (23) einen invertierten Querschnitt aufweisen, und daß die Seitenränder (26a,26b) des Bandes (26) dafür geeignet sind, unter Kraft zwischen die Schenkel der U-förmigen Teilstücke (24,29) eingebracht zu werden.
